**Europäisches Patentamt**

**European Patent Office**

**Office européen des brevets**

(11) Veröffentlichungsnummer : **0 083 807**
**B1**

(12) **EUROPÄISCHE PATENTSCHRIFT**

(45) Veröffentlichungstag der Patentschrift :
19.12.84

(21) Anmeldenummer : **82200015.4**

(22) Anmeldetag : **08.01.82**

(51) Int. Cl.³ : **B 01 J   3/04**

(54) Beheizbarer Hochdruck-Autoklav.

(43) Veröffentlichungstag der Anmeldung :
**20.07.83 Patentblatt 83/29**

(45) Bekanntmachung des Hinweises auf die Patenterteilung : **19.12.84 Patentblatt 84/51**

(84) Benannte Vertragsstaaten :
**DE GB NL**

(56) Entgegenhaltungen :
**DE-B- 1 094 718**
**US-A- 2 631 091**
**US-A- 3 842 181**
**US-A- 4 235 841**

(73) Patentinhaber : **Ernst Haage Apparatebau und**
**Labor-Einrichtungen**
**Hauskampstrasse 58**
**D-4330 Mülheim-Ruhr 11 (DE)**

(72) Erfinder : **Hirsch, Wilhelm**
**Saarner Strasse 205**
**D-4330 Mülheim-Ruhr (DE)**

(74) Vertreter : **Ackmann, Günther, Dr.-Ing.**
**Claubergstrasse 24 Postfach 10 09 22**
**D-4100 Duisburg 1 (DE)**

**Beschreibung**

Die Erfindung betrifft einen beheizbaren Hochdruck-Autoklaven für hohe Betriebstemperaturen, bestehend aus einem dünnwandigen, auf seinem Außenmantel mit einer elektrischen Heizspirale versehenen Reaktionsgefäß, das mit Abstand in einem dickwandigen Druckbehälter angeordnet ist, wobei eine Isoliermasse aus Feuerbeton den Zwischenraum ausfüllt.

Beheizbare Hochdruck-Autoklaven werden für Hochdruckreaktionen verschiedener Stoffe, beispielsweise Kohlenwasserstoffverbindungen, in der chemischen Verfahrenstechnik und in Laboratorien verwendet. Einem Betrieb solcher Hochdruck-Autoklaven in Räumen, in denen sich Gase, Dämpfe, Nebel oder Stäube, die mit Luft explosionsfähige Gemische bilden, in gefährlicher Weise ansammeln können, sind durch die erforderlichen Explosionsschutzmaßnahmen jedoch Grenzen gesetzt. Diese Schwierigkeiten werden noch dadurch erhöht, daß für einen Hochdruck-Autoklaven ohnehin besondere Sicherheitsvorkehrungen zu treffen sind, um die Entstehung von Rissen im Druckbehälter oder gar eine Explosion des Druckbehälters zu verhindern.

Bekannt sind Hochdruck-Autoklaven, bei denen der Druckbehälter auch das Reaktionsgefäß bildet. Der für den hohen Druck ausgelegte dickwandige Druckbehälter wird mittels eines an dessen Außenmantel angeordneten elektrischen Heizelementes beheizt. Der beheizbare Druckbehälter befindet sich in einem nach außen wärmeisolierten, topfartigen Behälter. Diese Ausführung hat den Nachteil, daß der dickwandige Druckbehälter unmittelbar von der Heizung beaufschlagt wird und daher zur Vermeidung von Spannungsrissen nur sehr langsam aufgeheizt und abgekühlt werden darf. Weiterhin besteht die Gefahr, daß der Außenmantel des Isolierbehälters eine Oberflächentemperatur erreicht, die über dem für einen Explosionsschutz einzuhaltenden Höchstwert liegt.

Für eine hohe thermische Belastbarkeit ist aus der DE-AS 10 94 718 ein mit einem Rührwerk ausgerüsteter Hochdruck-Autoklav bekannt, bei dem ein dünnwandiges Reaktionsgefäß auf seinem Außenmantel mit einer Heiz- bzw. Kühlschlange versehen und unter Zwischenlage einer gasdurchlässigen Isoliermasse, z. B. Raschigringen, Berlsätteln, Steinzeugkugeln o. dgl. in einem dickwandigen Druckbehälter angeordnet ist. Die Übertragung des Druckes vom Reaktionsgefäß auf den Druckbehälter erfolgt durch den Aufbau eines Gasdruckes in dem mit den keramischen Isolierkörpern gefüllten Zwischenraum mit Hilfe einer automatischen Druckgas-Ausgleichsvorrichtung. Die Einrichtung für den Druckausgleich ist jedoch umständlich im Aufbau und erfordert eine besondere Druckgasquelle, deren Druck wesentlich über dem Betriebsdruck des Autoklaven liegen muß. Das durch die Heiz- bzw. Kühlschlange zu leitende flüssige oder gasförmige Kühlmittel muß in einem zusätzlichen externen Heizapparat erzeugt werden. Dieses Heizsystem läßt auch keine hohen Betriebstemperaturen zu und führt zu relativ langen Aufheiz- bzw. Abkühlzeiten.

Ein ähnlicher, aus dem DE-GM 19 06 034 bekannter Hochdruck-Autoklav besteht aus einer elektrisch beheizten dünnwandigen Reaktionskammer und einer die Reaktionskammer gegen die Innenwand eines dickwandigen Druckgefäßes abstützenden keramischen Isoliermasse. Auf dem Außenmantel der Reaktionskammer ist ein, in eine keramische Isoliermasse eingebetteter Heizleiter aufgewickelt. Die der Abstützung dienende keramische Isoliermasse ist aus einer hydraulisch abbindenden keramischen Masse gebildet, die mittels eines Schraubverschlusses verdichtet wurde und unter zusätzlichem Druck aushärtete. Für den Fall eines Entweichens von Reaktionsgasen infolge einer Zerstörung der Reaktionswand sind in der Wandung des Druckgefäßes Bohrungen angeordnet. Dieser Hochdruck-Autoklav ist jedoch nur für kleine Stoffmengen geeignet und läßt sich nicht ohne weiteres mit einem in der Regel benötigten Rührwerk ausrüsten. Für einen Betrieb in explosionsgefährdeten Räumen ist eine solche Ausführung nicht geeignet.

Demgegenüber liegt der Erfindung die Aufgabe zugrunde, einen beheizten Hochdruck-Autoklaven der gattungsgemäßen Art derart auszubilden, daß er für einen Betrieb in explosionsgefährdeten Räumen geeignet ist.

Diese Aufgabe wird dadurch gelöst, daß die Wärmeisolierung des gasdicht verschlossenen Druckbehälters für eine im Betriebszustand entsprechend der Zündgruppe oder Temperaturklasse für explosionsgefährdete Räume vorgeschriebene maximale Oberflächentemperatur ausgebildet ist, ein im Bereich der Heizspirale angeordneter Temperaturfühler mit einem den Heizstrom bei Erreichen einer entsprechend festgelegten maximalen Heiztemperatur abschaltenden Temperaturregler verbunden ist und die Polanschlüsse für die Heizspirale in einem im Druckbehälter angebrachten explosionsgeschützten Anschlußkasten angeordnet sind.

Die Erfindung geht davon aus, daß für explosionsgefährliche Stoffgruppen bestimmte Zündgruppen und hierfür maximal zulässige Oberflächentemperaturen der Betriebseinrichtung vorgeschrieben sind. Danach darf beispielsweise in Räumen, in denen brennbare Gase der Zündgruppe G 3, zu denen z. B. Benzin gehört, auftreten können, die Oberflächentemperatur der Betriebseinrichtungen 160 °C nicht überschreiten. Für andere Zündgruppen gelten andere zulässige Oberflächentemperaturen.

Die erfindungsgemäße Bemessung des mit Isoliermasse gefüllten Zwischenraums in Verbindung mit der Heizstromregelung stellt sicher, daß die Oberflächentemperatur des Hochdruck-Autoklaven den vorgeschriebenen Wert nicht überschreitet. Hierfür ist eine maximale Heiztemperatur bestimmt und festgelegt, die auch bei lang andauerndem Betrieb nur zu einer Erwärmung des Außenmantels vom Hochdruck-Autoklaven bis zur vorgeschriebenen Oberflächentemperatur führt. Die maximale Heiztemperatur, die im Bereich der Heizspirale am Reaktionsgefäß entsteht, läßt sich empirisch einfach bestimmen und festlegen, indem durch Eichung in einem oder mehreren Tests die mit jeweils einer vorgegebenen Heiztemperatur erzielte Oberflächentemperatur ermittelt wird ; liegt diese noch über der vorgeschriebenen maximalen Oberflächentemperatur, wird die Heiztemperatur im Temperaturregler so weit heruntergeführt, bis der zulässige Wert der Oberflächentemperatur nicht mehr überschritten wird. Die bestimmte Heiztemperatur wird dann im Temperaturregler als maximale Heiztemperatur festgelegt, d. h. fixiert. Der im Bereich der Heizspirale angeordnete Temperaturfühler dient einerseits der Eichung, d. h. der Ermittlung der maximal zulässigen Heiztemperatur, anderseits der Betriebskontrolle, indem er ein Überschreiten der festgelegten maximalen Heiztemperatur, z. B. durch Einwirkung exothermer Reaktionswärme, elektrischer Spannungsschwankungen u. dgl., an den Temperaturregler meldet, der den Heizstrom dann abschaltet, bis die Heiztemperatur wieder ausreichend abgefallen ist. Die Heizspirale bzw. deren Leiterdraht ist in dem gasdicht verschlossenen Druckbehälter nach außen explosionssicher abgekapselt, so daß aus der Umgebung keine explosionsfähigen Gasgemische eindringen und sich entzünden können. Ebenso ist ein Zutritt solcher Gasgemische auch im Bereich der Polanschlüsse durch die Anordnung des explosionsgeschützten Anschlußkastens verhindert.

Zweckmäßig ist der Druckbehälter mit einer gasdicht befestigten Bodenplatte versehen, die eine Entgasungsbohrung aufweist, welche in eine gasdichte Entgasungskammer mündet, an die ein Entgasungsrohr angeschlossen ist. Diese Anordnung der Entgasungsbohrung vereinfacht nicht nur den gasdichten Verschluß des Druckbehälters, sondern ermöglicht eine günstige Ableitung etwaiger Reaktionsgase, die infolge einer Leckage des Reaktionsgefäßes ausströmen, wobei das Entgasungsrohr auch mit einer außerhalb des explosionsgefährdeten Raumes angeordneten Vakuumpumpe verbunden sein kann. Eine bauliche Vereinfachung läßt sich auch dadurch erreichen, daß der Anschlußkasten für die Polanschlüsse auf der Entgasungskammer angeordnet ist. Die isolierten Heizleiterdrähte können dabei durch die Entgasungskammer geführt sein.

In Fällen einer hohen Zündgruppe und/oder sehr hohen Betriebstemperaturen kann eine zusätzliche Außenkühlung des Druckbehälters vorgesehen sein, indem um den Druckbehälter herum ein Kaminmantel mit Abstand angeordnet ist. In dem zylinderförmigen Zwischenraum steigt die Außenluft kaminartig nach oben und kühlt dabei den Druckbehälter ab. Unterstützt werden kann die Kühlwirkung dadurch, daß dem Kaminmantel ein Kühlluftgebläse zugeordnet ist, welches bei Erreichen der festgelegten maximalen Heiztemperatur durch den Temperaturregler eingeschaltet wird. Zweckmäßig ist dabei das Kühlluftgebläse außerhalb des explosionsgefährdeten Raumes aufgestellt und durch ein Rohr mit dem Kaminmantel bzw. einem Kaminboden verbunden. Doch kann auch ein explosionsgeschütztes Kühlluftgebläse verwendet werden.

Die Erfindung ist in der Zeichnung beispielsweise dargestellt ; es zeigt :

Figur 1 einen Hochdruck-Autoklaven in einem Längsschnitt,

Figur 2 ein Schaltbild für die dem Hochdruck-Autoklaven zugehörige Temperaturregelung,

Figur 3 einen Hochdruck-Autoklaven mit einem zusätzlichen Kaminmantel und

Figur 4 den Gegenstand der Fig. 3 mit einem Zuleitungsrohr für Kühlluft.

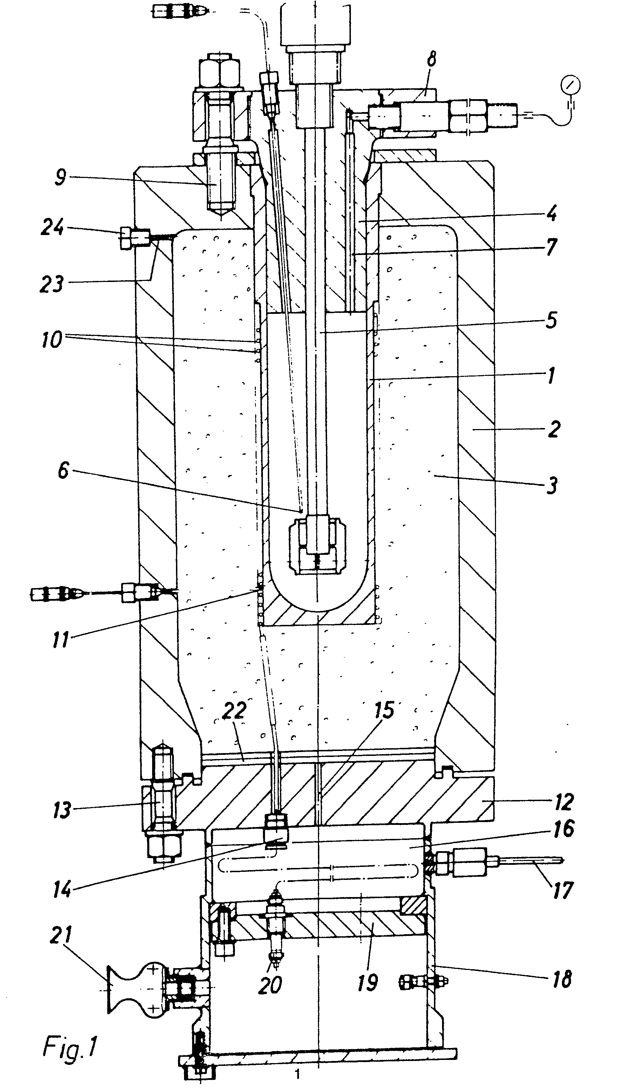

Der in Fig. 1 gezeigte Hochdruck-Autoklav besteht im wesentlichen aus einem dünnwandigen Reaktionsgefäß 1, einem dickwandigen Druckbehälter 2 und einer Isoliermasse 3. Am oberen Ende des Reaktionsgefäßes 1 ist ein Kopfverschluß 4 angebracht, durch den die Welle 5 eines Rührwerkes und ein Temperaturfühler (6) für die Reaktionskammer ragen und ein Kanal 7 für den Gaseinlaß bzw. Gasauslaß führt. Der Kopfverschluß 4 ist durch einen Flansch 8 mittels Schrauben 9 am Druckgehäuse 2 befestigt, so daß ein völlig dichter Verschluß des Reaktionsraumes auch bei hohen Innendrücken von etwa 800 bar erzielt wird. Das Reaktionsgefäß 1, der Druckbehälter 2 und der Kopfverschluß 4 sind vorzugweise aus Edelstahl gefertigt. Wie Fig. 1 zeigt, hängt das Reaktionsgefäß axial in dem in Gestalt eines Hohlzylinders ausgebildeten Druckbehälter 2 mit einem Abstand, so daß ein Zwischenraum verbleibt, der durch die Isoliermasse 3 ausgefüllt wird.

Auf dem Außenmantel des Reaktionsgefäßes 1 ist eine elektrische Heizspirale 10 aufgewickelt, welche aus einem elektrisch isolierten Heizkabel besteht, das beispielsweise aus einem Metallmantel und pulverförmigem Isolierstoff aufgebaut sein kann. Diese Heizspirale kann bedarfsweise mit einer Feuerbeton-Masse am Außenmantel fixiert werden.

Durch den Mantel des Druckbehälters 2 ist weiterhin ein Temperaturfühler 11 geführt und gasdicht befestigt, dessen Fühlerspitze zwischen zwei Wicklungen der Heizspirale 10 liegt. Die untere Öffnung des Druckbehälters 2, die etwa seinem Innendurchmesser entspricht, ist durch eine Bodenplatte 12 und mit Hilfe von Schrauben 13 verschlossen. An der Bodenplatte 12 ist eine Kabelverschraubung 14 für das Heizkabel der Heizspirale 10 angebracht und eine axiale Entgasungsbohrung 15 vorgesehen. Unter der Bodenplatte 12 ist ein Rohrstutzen angeschweißt, der durch eine Zwischenwand 19 eine obere Entgasungskammer 16 und darunter einen Anschlußkasten 18 für die Polanschlüsse 20 bildet. An die Entgasungskammer 16 ist ein Entgasungsrohr 17 angeschlossen, das außerhalb des explosionsgefährdeten Raumes ins Freie oder zu einer dort aufgestellten Vakuumpumpe führt. Der Anschlußkasten 18 ist mit einer Platte explosionsgeschützt abgedichtet und mit einem Einführungsstutzen 21 für das Stromkabel (nicht dargestellt) versehen, das mit den Polanschlüssen 20 verbunden ist.

Die Isoliermasse 3 besteht aus Feuerbeton, der aus der Mischung eines hydraulischen Bindemittels, in der Regel Tonerdeschmelzelement, und zerkleinertem feuerfestem Material, z. B. Schamottemehl, besteht. In die aus dem Reaktionsgefäß 1 und Druckbehälter 2 bestehende Baueinheit wird die mit Wasser angemachte Masse durch die Bodenöffnung eingefüllt, wobei zur Bildung von Absaugkanälen Asbeststränge o. dgl. eingelegt werden. Die festgestampfte Masse erhärtet dann zunächst hydraulisch. Anschließend wird die Masse getrocknet, wobei einerseits das Reaktionsgefäß von innen auf etwa 300-400 °C beheizt und durch die Bohrung 23 des an seinem Boden noch offenen Druckbehälters 2 Luft gesaugt wird. Nach einer mehrtägigen Trocknungsbehandlung wird um den Druckbehälter 2 ein Isoliermantel gelegt und die Heizspirale auf etwa 900 °C aufgeheizt, bis sich die Feuerbetonmasse keramisch zu einem festen Druckkörper verfestigt hat. Schließlich wird die Bodenplatte 12 unter Zwischenlage einer Asbestplatte 22 o. dgl. angeschraubt und durch Anlegen eines Vakuumgerätes an die Bohrung 23 restliches Wasser abgesaugt, wobei die zuvor eingelegten Asbeststränge Abzugskanäle bilden. Die Bohrung 23 wird später durch einen Blindstopfen 24 gasdicht verschlossen.

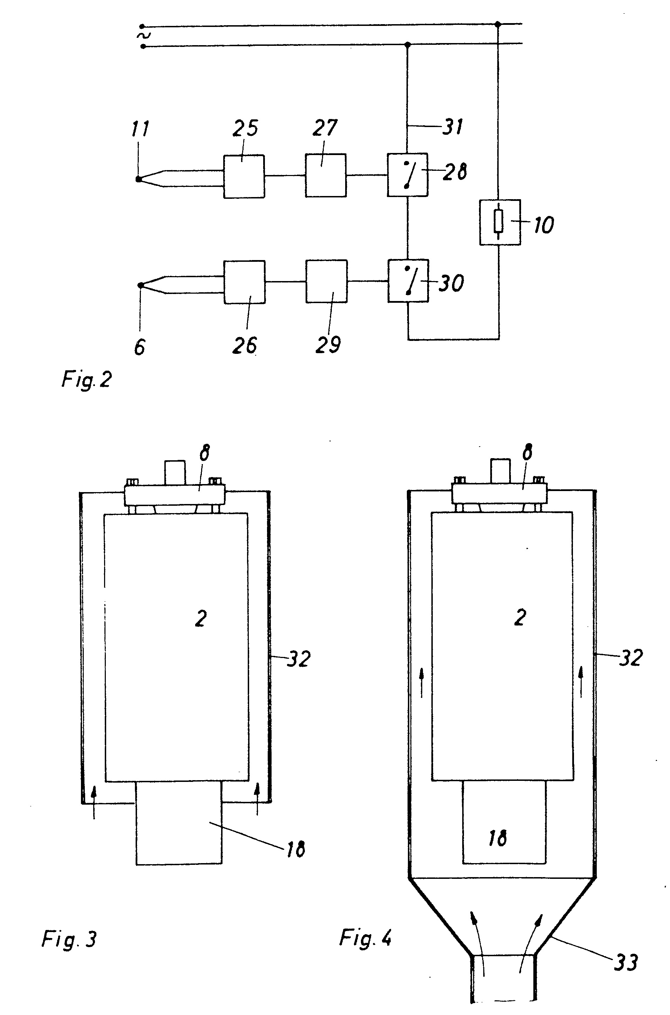

Nach Fertigstellung des Hochdruck-Autoklaven werden die Temperaturfühler 6, 11 an Temperaturregler 26 bzw. 25 angeschlossen, die über Relais 27, 29 und Schalter 28, 30 die Stromleitungen 31 für die Heizspirale 10 regeln (vgl. Fig. 2). Der Temperaturregler 25 wird so eingestellt, daß er bei einer bestimmten, vom Temperaturfühler 11 gemessenen Temperatur die Stromspeisung der Heizspirale 10 abschaltet und erst bei einer darunter liegenden Temperatur einschaltet.

Die maximale Heiztemperatur wird in Abhängigkeit von den Schutzmaßnahmen empirisch durch eine Eichung des Hochdruck-Autoklaven festgelegt. Soll der Hochdruck-Autoklav beispielsweise in einem explosionsgefährdeten Raum betrieben werden, in dem brennbare Gase der Zündgruppe G 3 nach DIN 57165 auftreten können, darf nach den Explosionsschutzbestimmungen die Oberflächentemperatur des Hochdruck-Autoklaven 160 °C nicht überschreiten. Für die Eichung werden an verschiedenen Stellen außen am Hochdruck-Autoklaven Temperaturfühler angebracht und die Oberflächentemperaturen bestimmt, die sich nach einer längeren Beheizungszeit bei einer bestimmten Heiztemperatur einstellen. Stellt sich bei einer Heiz-Temperatur von z. B. 780 °C eine Oberflächentemperatur von mehr als 160 °C ein, so wird die Heiztemperatur im Temperaturregler 25 auf einen niedrigeren Wert, z. B. 750 °C eingestellt und in einem neuen Eichtest an dem zuvor erkalteten Hochdruck-Autoklaven festgestellt, welche maximale Oberflächentemperatur sich nun einstellt. Liegt diese knapp unter dem vorgeschriebenen Maximalwert, so wird die zugehörige Heiztemperatur als maximale Heiztemperatur im Temperaturregler festgelegt bzw. fixiert, so daß bei deren Überschreiten der Heizstrom grundsätzlich abgeschaltet wird. Durch mehrere herantastende Eichtests läßt sich die gesuchte maximale Heiztemperatur sehr genau ermitteln.

Für Räume mit explosionsgefährlichen Gasen anderer Zündgruppen sind die zugehörigen maximal zulässigen Oberflächentemperaturen zugrunde zu legen. Für die Zündgruppen G 1 bis G 5 nach DIN 57165 liegen die zulässigen Oberflächentemperaturen bei 360 °C, 240 °C, 160 °C, 110 °C und 80 °C. Ein beispielsweise auf eine Oberflächentemperatur von maximal 160 °C geeichter Hochdruck-Autoklav ist natürlich auch für die Zündgruppen G 1 und G 2 nach DIN 57165 geeignet.

Der Hochdruck-Autoklav ermöglicht Betriebstemperaturen im Reaktionsgefäß 1, die etwa bei 500 °C liegen. Die gewünschte Betriebstemperatur wird an dem Temperaturregler 26 eingestellt und durch dem Temperaturfühler 6 überwacht. Sollen höhere Betriebstemperaturen bis zu etwa 800 °C erreicht werden, ist die Wärmeisolierung, d. h. die Bemessung des mit der Isoliermasse 3 gefüllten Zwischenraumes, entsprechend auszubilden. Je nach der Bemessung des Druckbehälters 2 kann der Hochdruck-Autoklav mit Drücken bis etwa 800 bar beaufschlagt werden.

In Fig. 3 ist die zusätzliche Anordnung eines Kaminmantels 32 gezeigt, mit dem eine zusätzliche Außenkühlung des Druckbehälters 2 erzielt wird, wobei die Außenluft von unten nach oben an der Oberfläche des Druckbehälters 2 entlangströmt und diesen dabei abkühlt. Verstärkt werden kann die Kühlwirkung, wenn entsprechend Fig. 4 Kühlluft von außen mittels eines Kühlgebläses über ein Rohr 33 zugeführt wird. Das Kühlgebläse (nicht dargestellt) wird zweckmäßig bei Erreichen der festgelegten maximalen Heiztemperatur durch den Temperaturregler 25 eingeschaltet.

## Ansprüche

1. Beheizbarer Hochdruck-Autoklav für hohe Betriebstemperaturen, bestehend aus einem dünnwandigen, auf seinem Außenmantel mit einer elektrischen Heizspirale versehenen Reaktionsgefäß, das mit Abstand in einem dickwandigen Druckbehälter angeordnet ist, wobei eine Isoliermasse aus Feuerbeton den Zwischenraum ausfüllt, dadurch gekennzeichnet, daß die Wärmeisolierung (3) des gasdicht verschlossenen Druckbehälters (2) für eine im Betriebszustand entsprechend der Zündgruppe oder Temperaturklasse für explosionsgefährdete Räume vorgeschriebene maximale Oberflächentemperatur ausgebildet ist, ein im Bereich der Heizspirale (10) angeordneter Temperaturfühler (11) mit einem den Heizstrom bei Erreichen einer entsprechend festgelegten maximalen Heiztemperatur abschaltenden Temperaturregler (25) verbunden ist und die Polanschlüsse (20) für die Heizspirale (10) in einem am Druckbehälter (2) angebrachten explosionsgeschützten Anschlußkasten (18) angeordnet sind.

2. Beheizbarer Hochdruck-Autoklav nach Anspruch 1, dadurch gekennzeichnet, daß der Druckbehälter (2) mit einer gasdicht befestigten Bodenplatte (12) versehen ist, die eine Entgasungsbohrung (15) aufweist, welche in eine gasdichte Entgasungskammer (16) mündet, an die ein Entgasungsrohr (17) angeschlossen ist.

3. Beheizbarer Hochdruck-Autoklav nach Anspruch 2, dadurch gekennzeichnet, daß der Anschlußkasten (18) für die Polanschlüsse (20) auf der Entgasungskammer (16) angeordnet ist.

4. Beheizbarer Hochdruck-Autoklav nach einem der Ansprüche 1 bis 3, dadurch gekennzeichnet, daß mit Abstand um den Druckbehälter (2) herum ein Kaminmantel (32) angeordnet ist.

5. Beheizbarer Hochdruck-Autoklav nach Anspruch 4, dadurch gekennzeichnet, daß dem Kaminmantel (32) ein Kühlluftgebläse zugeordnet ist, welches bei Erreichen der festgelegten maximalen Heiztemperatur durch den Temperaturregler (25) eingeschaltet wird.

**Claims**

1. A heatable high-pressure autoclave for high operating temperatures, comprising a thin-walled reaction vessel having an electric heating coil on its outer jacket and disposed at a distance in a thick-walled pressure container, a refractory concrete insulating material filling the space between, characterised in that the space filled with insulating material (3) is dimensioned in accordance with the prescribed maximum surface temperature of the pressure container (2), which is gas-tight sealed, a temperature sensor (11) disposed near the heating coil (10) is connected to a temperature regulator (25) which switches off the heating current when a correspondingly fixed maximum heating temperature is reached, and the terminal connections (20) for the heating coil (10) are disposed in an explosion-proof connecting box (18) at the pressure container (2).

2. A heatable high-pressure autoclave according to claim 1, characterised in that the pressure container (2) has a baseplate (12) secured in gastight manner and formed with a degassing bore (15) which opens into a gas-tight degassing chamber to which a degassing pipe (17) is connected.

3. An autoclave according to claim 2, characterised in that the terminal box (18) for the connections (20) is disposed on the degassing chamber (16).

4. An autoclave according to any of claims 1 to 3, characterised in that a chimney jacket (32) is disposed at a distance around the pressure container (2).

5. An autoclave according to claim 4, characterised in that the chimney jacket (32) is associated with a cooling-air blower which is switched on by the temperature regulator (25) when the fixed maximum heating temperature is reached.

**Revendications**

1. Autoclave haute pression susceptible d'être chauffé pour des températures de service élevées, constitué d'un vase de réaction à paroi mince qui est muni, sur sa face latérale extérieure, d'un serpentin électrique de chauffage et qui est disposé dans un récipient à paroi épaisse tenant la pression et à distance de celui-ci, une masse isolante en béton réfractaire emplissant l'espace intermédiaire, caractérisé en ce que l'espace intermédiaire empli de masse isolante (3) est dimensionné pour la température de surface maximale prescrite du récipient tenant la pression (2) fermé de manière étanche au gaz, une sonde de température (11), disposée dans la région du serpentin de chauffage (10), est reliée à un régulateur de température (25) pouvant débrancher le courant électrique de chauffage lorsqu'une température maximale de chauffage fixée de manière correspondante est atteinte, et les bornes polaires (20) du serpentin de chauffage (10) sont disposées dans un caisson de raccordement (18) utilisable dans les atmosphères explosives et fixé au récipient tenant la pression (2).

2. Autoclave haute pression susceptible d'être chauffé suivant la revendication 1, caractérisé en ce que le récipient tenant la pression (2) est muni d'une plaque formant fond (12) fixée de manière étanche au gaz et présentant un perçage (15) de dégazage, qui débouche dans une chambre de dégazage (16) étanche au gaz et à laquelle est raccordé un tuyau de dégazage (17).

3. Autoclave haute pression susceptible d'être chauffé suivant la revendication 2, caractérisé en ce que le caisson de raccordement (18) pour les bornes polaires (20) est disposé sur la chambre de dégazage (16).

4. Autoclave haute pression susceptible d'être chauffé suivant l'une des revendications 1 à 3, caractérisé en ce qu'une enveloppe (32) formant cheminée est disposée autour du récipient tenant la pression (2) et à distance de celui-ci.

5. Autoclave haute pression susceptible d'être chauffé suivant la revendication 4, caractérisé en ce qu'à l'enveloppe formant cheminée (32) est associée une soufflante d'air réfrigérant, qui est branchée par le régulateur de température (25), lorsque la température maximale de chauffage fixée est atteinte.

**0 083 807**

Fig.1

Fig. 2

Fig. 3

Fig. 4